# EUROPÄISCHE PATENTSCHRIFT

(11) **EP 1 357 303 B1**
(45) Veröffentlichungstag und Bekanntmachung des Hinweises auf die Patenterteilung: **18.01.2006**
(21) Anmeldenummer: 02076662.2
(22) Anmeldetag: 26.04.2002
(51) Int. Cl.: F16B 25/00, F16B 25/10

(54) **Schraube**
Screw
Vis

(43) Veröffentlichungstag der Anmeldung: 29.10.2003
(73) Patentinhaber: Hsu, Kuo-Tai, Tainan (TW)
(72) Erfinder: Hsu, Kuo-Tai, Tainan (TW)
(74) Vertreter: Powell, Timothy John

(56) Entgegenhaltungen:
- EP-A- 0 024 118
- EP-A- 0 930 438
- FR-A- 385 906
- US-A- 2 096 937
- US-A- 2 232 336

## Beschreibung

### [Technisches Gebiet]

Die vorliegende Erfindung betrifft eine Verbesserung einer Nagelschraube, insbesondere eine solche mit am Boden der Gewindenut eingearbeiteten Spannuten zum Auffang der bei ihrem Einschrauben entstehenden Späne.

### [Stand der Technik]

Die herkömmliche Nagelschraube trägt an ihrem Schaft ein Gewinde, das sich von ihrem Schraubenkopf schraubenförmig bis zu ihrer Spitze erstreckt, mit der diese Nagelschraube in einem Werkstoff eingesteckt und mittels des Gewindes zwangsläufig in diesen eingeschraubt wird. Mit dem zunehmenden Einschraubtief wird infolge der Verdichtung der während des Eingeschraubens entstehende Späne , die durch die eingeschraubte Schraube radial nach außen zusammengedrückt werden und zum ansteigenden Widerstand für den weiteren Vorschub führen, ein weiteres Hineinschrauben erschwert. Zum Verbesserung des Einschraubens wurde es bekannt, an der Spitze mit einer V-Förmigen Einschneidenut bzw. mit einem Einsclneidezahn zum Erleichtern des Einsteckens in den Werkstoff auszurüsten. Nachteilig ist bei diesen bekannten Maßnahmen, daß das Zusammendrückung des Gefüges des Werkstücks infolge des Eindringens der Schraube nicht durch das erleichterte Einstecken allein entspannt werden kann ,weil die während des Einschraubens entstehende Späne verdichtet bleiben und sich der Werkstoff um die Schraube nach außen ausdehnt, wodurch an der Einschraubstelle Risse entstehen können.

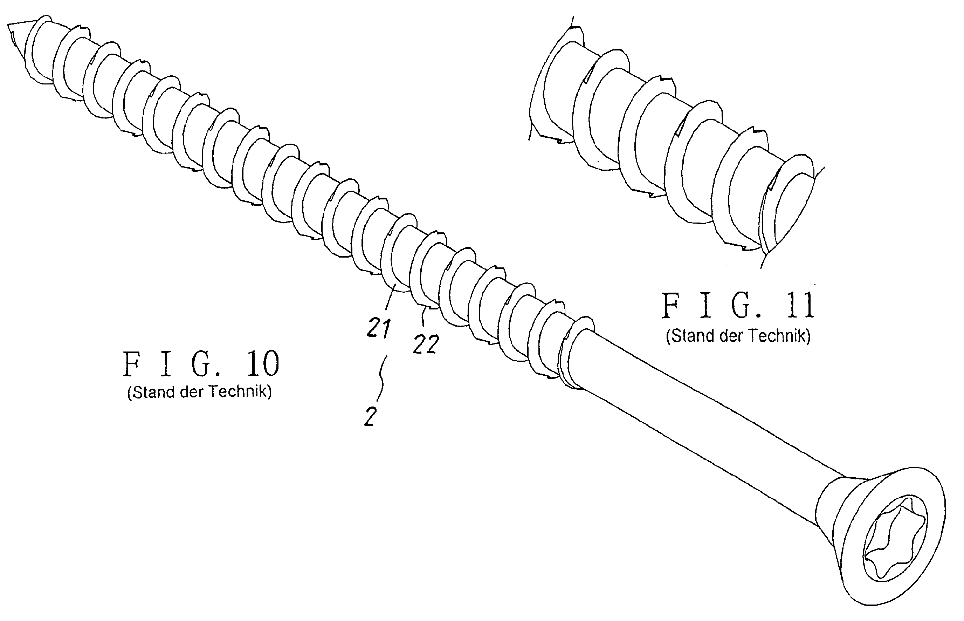

Um diesen Nachteil zu vermeiden, weist eine in den Figuren 10 und 11 dargestellte, bekannte Nagelschraube im Scheitelbereich des Schraubengewindes voneinander im Abstand angeordnete Einkerbungen (22) auf, die die beim Einschrauben entstehenden Späne aufnehmen und dadurch deren Zusammendrücken vermindern sollen und deren vordere Kanten als Schneidezähne zur Erleichterung des Einschraubens ausgebildet sind. Wegen der geringen Aufnahmekapazität dieser - Einkerbungen werden sie bereits kurz nach dem Beginn des Einschraubens mit Spänen ausgefüllt, die im weiteren Verlauf stärker verdichtet werden und einen zunehmenden Widerstand gegen das Einschrauben aufbauen. Deshalb kann bei dieser Schraube das aus dem Zusammendrücken des Werkstoffes resultierende Problem nur begrenzt und in nicht ausreichendem Maße beseitigt werden.

Aus den Druckschriften EP-A-0 024 118, US-A-2 232 336 und FR 385 906 A ist jeweils eine Schraube bekannt, bei der sich wenigstens eine Spannut spiralförmig oder geradlinig so erstreckt, daß sie nicht nur den Boden der Gewindenut, sondern auch den über diesen Boden vorstehenden Scheitelteil des Gewindes durchschneidet. Durch diese Ausgestaltung wird das Eindrehen der Schraube erschwert, da die an dem überstehenden Scheitelteil des Gewindes ausgebildeten Spannutflanken der Einschraubbewegung einen Widerstand entgegensetzen.

Demgegenüber liegt der Erfindung die Aufgabe zugrunde, eine Nagelschraube der eingangs genannten Art so auszubilden, daß bei ihr die Nachteile der bekannten Schrauben vermieden werden können.

Diese Aufgabe wird durch eine Nagelschraube mit den im Anspruch 1 niedergelegten Merkmalen dadurch gelöst, daß die Nagelschraube ausschließlich am Boden ihrer Gewindenut mit Ausnehmungen in Form von eingearbeiteten, voneinander im Abstand angeordneten Spannuten zum Auffangen der beim Einschrauben entstehenden Späne ausgebildet ist, während der über den Gewirideboden vorstehende Scheitelteil des Gewindes ununterbrochen bleibt. Dadurch wird erreicht, daß die Spannuten beim Einschrauben neben einem Einschneide-Zahneffekt ihrer Kanten auch eine vergrößerte, hinreichende Aufnahme für die dabei entstehenden Späne ermöglichen, durch die vermieden wird, daß die Spannuten schon mit den Spänen gefüllt werden, bevor die Schraube völlig in das Werkstück eingeschraubt wird.

Es ist weiterhin Aufgabe der Erfindung , eine verbesserte Nagelschraube dieser Gattung zu schaffen, die an ihrer Spitze zusätzlich ein Einscheidezahn bzw. eine V-förmige Einschneidenut aufweisen kann. Damit besitzt die erfindungsgemäße Nagelschraube neben ihren eigenen Vorteile auch die Vorteil der bekannten Schraube mit dieser Einschneidemitteln.

### [Zeichnung]

In weiterer Ausgestaltung der Erfindung wird auf die Zeichnung verwiesen, in der Ausführungsbeispiele der Erfindung dargestellt sind.

### Es zeigen:

Figur 1 in einem ersten Ausführungsbeispiel eine erfindungsgemäße Nagelschraube in perspektivischer Ansicht.
Figur 2 eine vergrößerte Darstellung eines Teils der Nagelschraube in Figur 1.

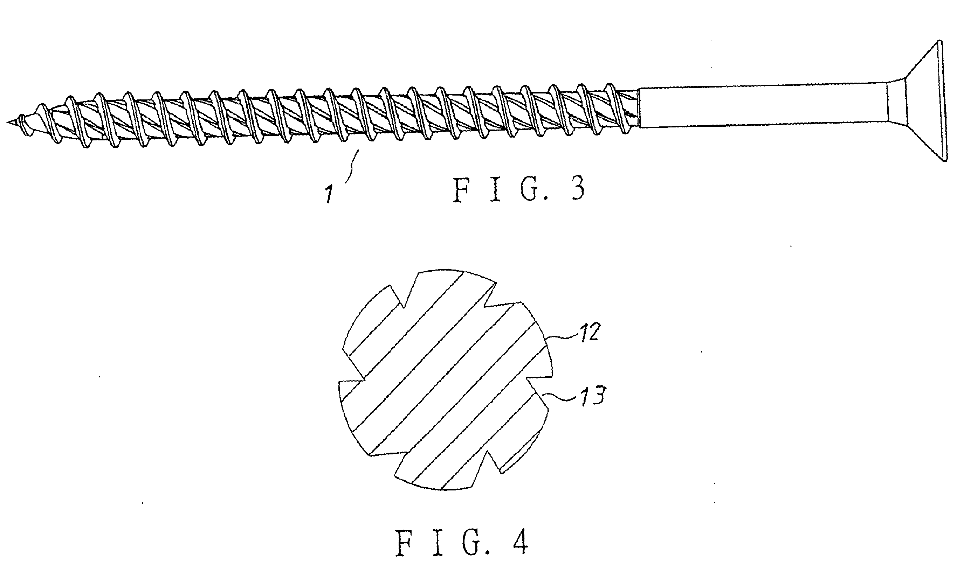

Figur 3 eine Seitenansicht der erfindungsgemäßen Nagelschraube in Figur 1.
Figur 4 einen Querschnitt der erfindungsgemäßen Nagelschraube in Figur 1.
Figur 5 ein zweites Ausführungsbeispiel einer erfindungsgemäßen Nagelschraube in perspektivischer Ansicht.
Figur 6 ein drittes Ausführungsbeispiel einer erfindungsgemäßen Nagelschraube in perspektivischer Ansicht.
Figur 7 der Figur 2 entspechend einen Teil der erfindungsgemäßen Nagelschraube in Figur 6 in vergrößerter Darstellung.
Figur 8 ein viertes Ausführungsbeispiel einer erfindungsgemäßen Nagelschraube in perspektivischer Ansicht.
Figur 9 entspechend der Figur 2 einen Teil der erfindungsgemäßen Nagelschraube in Figur 8 in vergrößerter Darstellung.
Figur 10 eine Nagelselaube nach dem Stand der Technik mit an der Gewindespitze voresehenen Einkerbungen in perspektivischer Ansicht.
Figur 11 eine vergrößerte Darstellung der bekannten Nagelschraube in Figur 10.

### [Beschreibung der bevorzugten Ausführungsbeispiele]

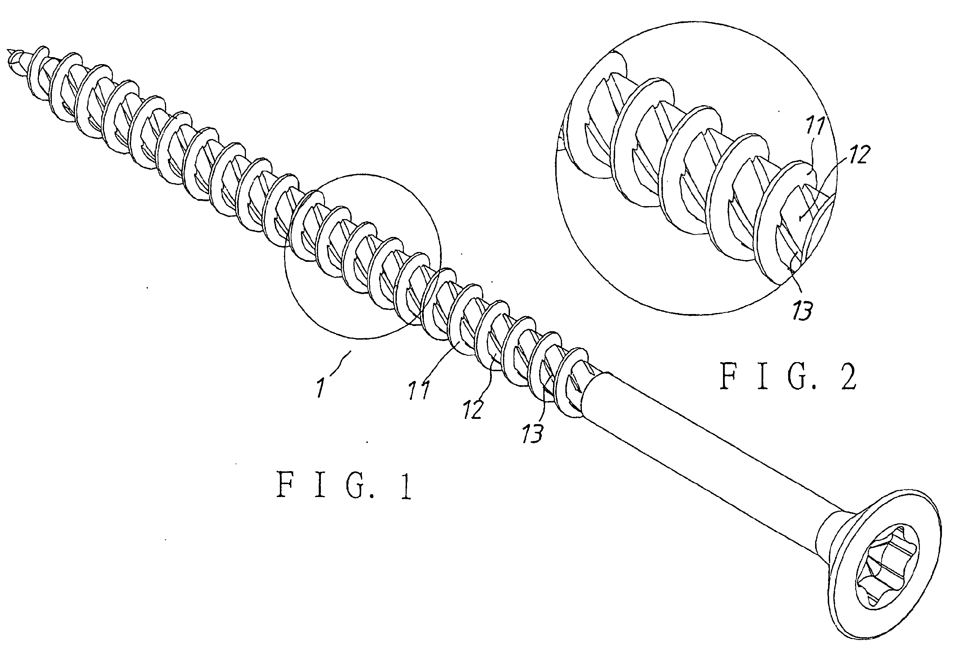

In den Figuren 1 und 2 ist eine mit (1) allgemein bezeichnete erfindungsgemäße Nagelschraube dargestellt, die ein Gewinde(11) aufweist, das am Boden seiner zwischen den benachbarten Gewindeflanken liegenden Gewindenut(12) mit darin eingearbeiteten Spannuten(13) versehen ist,die als sich schräg spiralförmig (wie dort dargestellt) oder auch axial geradlinig erstreckende Rillen ausgebildet werden können, die sowohl als Aufnahme für die Späne als auch als Einscheidekanten dienen. Daraus ist ersichtlich, daß die hierdurch erzielte Aufnahme eine viel größere Kapazität für die Späne hat als die in Figuren 10 und 11 gezeigten bekannten Schraube.

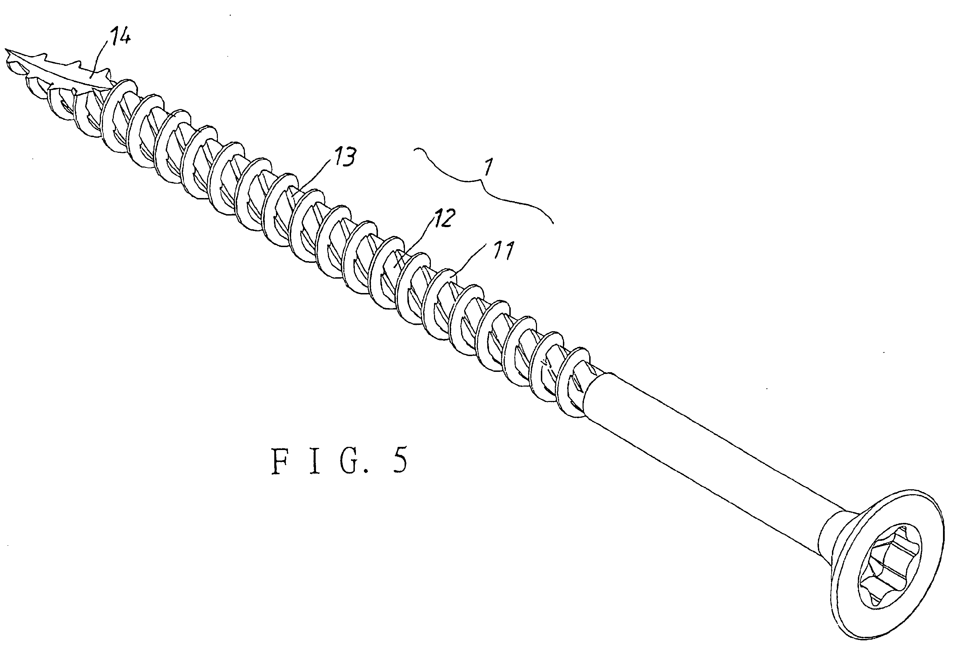

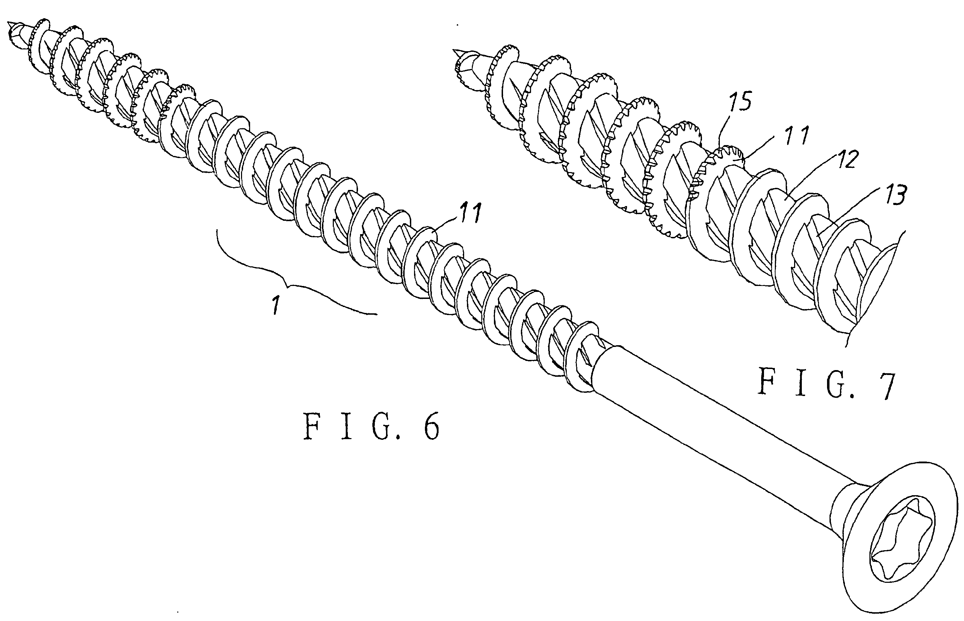

Neben den Spannuten(13) kann die erfindungsgemäße Schraube(1), wie aus Figur 5 ersichtlich, an ihrem Anfang mit einer V-förmigen Einschneidenut(14), oder, wie in Figuren 6 und 7 gezeigt, am vorderen Teil ihrer Gewindespitze mit einer sägezahnartigen Zahnung(15) ausgestattet werden.

Hierdurch läßt sich wie in Fiuren 1 bis 4 dargestellt die Schraube(1) mit dem eigentlichen Gewinde in ein Werkstück zwangsläufig einschrauben und mit Hilfe der Kanten ihrer Spannuten einen gleichzeitigen Einschnitt/Spanauffang durchführen, ohne eine ungewünschte Zusammendrückung des Werkstoffs nach außen zu verursachen, wie es beim Stand der Technik der Fall ist, wodurch eine Bildung der Risse durch die Überbelastung des Werkstoffs infolge des zwangsläufigen Einschraubens vermieden wird.

Beim Einschrauben ermöglichen neben ihrer Einschnittwirkung die erfindungsgcmäßcn Spannuten infolge deren gegenüber dem Stand der Technik erheblich vergrößerter Aufnahme für die Späne einen verdichtungslosen Auffang derselben vor dem völligen Einschrauben in das Werkstück. Wegen der Kombination der Einschnittwirkung und des ausreichenden Auffangs der Späne, die nur geeignet kompakt aufgefangen aber von einer Zusammendrückung befreit werden, bevor die Schraube völlig in das Werkstück eingeschrauben wird, kann das Einschrauben bemühungslos erfolgen. Darüber hinaus ergibt sich aus der geeignet kompakten Zerspanung zwischen dem Werkstück und der in dieses eingeschraubten Schraube eine noch sicherere Befestigung.

Die Einschnittwirkung wird noch erhöht, wenn die Schraube(1) neben den Spannuten(13) auch an ihrem Anfang mit einer V-förmigen Einschneidenut(13) versehen ist, mit der ein schnelles Einstecken in das Werkstück erlaubt wird. Die beim Einschrauben der V-förmigen Einschneidenut(13) in das Werkstück entstehenden Späne werden vorteilhaft in den daran anschließenden Spannuten(13) hineingefüllt.

Eine noch bessere Einschnitt-/Spanauffangswirkung beim Einschrauben wird erreicht, wenn die Schraube am vorderen Teil ihrer Gewindespitze zusätzlich eine sägezahnartige Zahnung(15) aufweist.

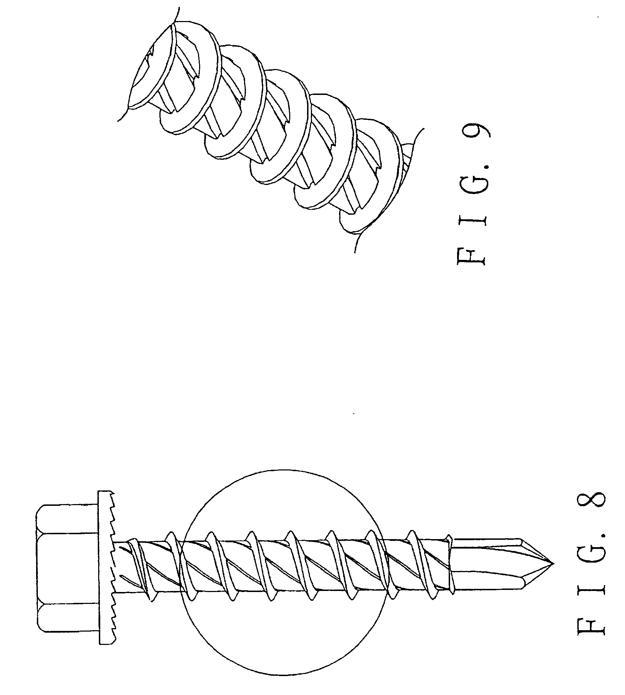

Schließlich zeigen Figuren 8 und 9 die Möglichkeit der Anwendung erfindungsgemäßen Spannuten(13) an der Gewindenut einer so-genannten "Stahlplattenschraube" mit ebenfalls zuverlässigem Ergebnis.

Die erfindungsgemäße Nagelschraube hat gegenüber den Schrauben nach dem Stand der Technik die Vorteile wie folgt:
1. Mit den Spannuten am Boden der Gewindenut werden mit Vorteil die beim Einschrauben der Schraube in das Werkstück erzeugten Späne verdichtungslos darin aufgefangen, wodurch das Werkstück vor einer Bildung der ungewünschten Risse aufgrund der zwangsläufigen Zusammendrückung des Werkstoffs geschüzt wird.
2. Die im Vergleich mit den bekannten Einkerbungen viel vergrößerten zahlreichen Spannuten gewährleisten neben einem schnellen Einschneiden beim Einschrauben auch einen einwandfreien Auffang der Späne, was das Einschrauben in das Werkstück erheblich erleichtert.
3. Die geeignet kompakte aber verdichtungsfreie Einfüllung der Späne in den Spannuten beim beendeten Einschrauben trägt zu einer sicheren Befestigung des Werkstücks bei.
4. Durch die Anordnung der V-förmigen Einschneidenut wird das Einschrauben noch erleichtert.
5. Die an der Gewindespitze vorgesehene Zahnung verleiht der Schraube bei ihrem Einschrauben eine noch verbesserte Einschnitt-/Spanauffangswirkung.

### [Bezugszeichenliste]

- (1): Nagelschraube
- (11): Gewinde
- (12): Gewindenut
- (13): Spannut
- (14): V-förmige Spannut
- (15): Zahnung
- (2): Nagelschraube
- (21): Gewinde
- (22): Einkerb

## Patentansprüche

1. Nagelschraube (1) mit einem Gewinde (11), das sich spiralartig vom Schraubenkopf bis zur Schraubenspitze erstreckt, wobei Spannuten (13) zum Einschneiden in ein Werkstück und zum Auffangen der beim Einschrauben entstehenden Späne ausschließlich in den Boden der Gewindenut (12) eingearbeitet sind.

2. Nagelschraube nach Anspruch 1, **dadurch gekennzeichnet, daß** die Spannuten (13) spiralartig ausgebildet sind.

3. Nagelschraube nach Anspruch 1, **dadurch gekennzeichnet, daß** die Spannuten geradlinig ausgebildet sind.

4. Nagelschraube nach Anspruch 1, **dadurch gekennzeichnet, daß** sie an der Schraubenspitze mit einer V-förmigen Einschneidenut (14) zum Einstecken in das Werkstück versehen ist.

5. Nagelschraube nach Anspruch 1, **dadurch gekennzeichnet, daß** der Außenumfang des Gewindes (11) im Bereich der Schraubenspitze mit einer sägezahnartigen Zahnung (15) versehen ist.

6. Nagelschraube nach Anspruch 1, **dadurch gekennzeichnet, daß** die Nagelschraube eine Stahlplattenschraube ist.

## Claims

1. Screw nail (1) with a thread (11) which extends helically from the screw head to the screw tip, flutes (13) for cutting into a workpiece and for collecting the chips arising during screwing-in being machined exclusively into the bottom of the thread groove (12).

2. Screw nail according to Claim 1, **characterized in that** the flutes (13) are of helical design.

3. Screw nail according to Claim 1, **characterized in that** the flutes are of rectilinear design.

4. Screw nail according to Claim 1, **characterized in that** it is provided, at the screw tip, with a V-shaped cutting-in groove (14) for insertion into the workpiece.

5. Screw nail according to Claim 1, **characterized in that** the outer periphery of the thread (11) is provided with a sawtooth-like serration (15) in the region of the screw tip.

6. Screw nail according to Claim 1, **characterized in that** the screw nail is a steel plate screw.

## Revendications

1. Vis filetée (1) avec un filet (11) qui s'étend de manière hélicoïdale depuis la tête de la vis jusqu'à la pointe de la vis, dans laquelle des goujures (13), destinées à entailler une pièce et à recevoir les copeaux générés par le vissage, sont usinées exclusivement dans le fond de la gorge (12) du filet.

2. Vis filetée selon la revendication 1, **caractérisée en ce que** les goujures (13) sont des goujures hélicoïdales.

3. Vis filetée selon la revendication 1, **caractérisée en ce que** les goujures sont des goujures rectilignes.

4. Vis filetée selon la revendication 1, **caractérisée en ce qu'**une rainure d'incision (14) en forme de V, destinée à entailler la pièce, est réalisée à la pointe de la vis.

5. Vis filetée selon la revendication 1, **caractérisée en ce qu'**une denture (15) en forme de dents de scie est réalisée au niveau de la pointe de la vis sur la périphérie extérieure du filet (11).

6. Vis filetée selon la revendication 1, **caractérisée en ce que** la vis filetée est une vis pour plaques d'acier.
